# EUROPÄISCHE PATENTSCHRIFT

(11) **EP 2 491 275 B1**
(45) Veröffentlichungstag und Bekanntmachung des Hinweises auf die Patenterteilung: **12.12.2018**
(21) Anmeldenummer: 10763615.1
(22) Anmeldetag: 29.09.2010
(51) Int. Cl.: F16H 61/00, F15B 1/22

(54) **VORRICHTUNG ZUM IMPULSARTIGEN FREIGEBEN EINER IN EINEM SPEICHERGEHÄUSE BEVORRATBAREN FLUIDMENGE**
DEVICE FOR RELEASING, IN A PULSED MANNER, AN AMOUNT OF FLUID THAT CAN BE STORED IN AN ACCUMULATOR HOUSING
DISPOSITIF POUR LIBÉRER PAR IMPULSIONS UNE QUANTITÉ DE FLUIDE POUVANT ÊTRE STOCKÉE DANS UN BOÎTIER DE STOCKAGE

(30) Priorität: 19.10.2009 DE 102009050847; 19.10.2009 DE 102009050848; 19.10.2009 DE 102009050833
(43) Veröffentlichungstag der Anmeldung: 29.08.2012
(73) Patentinhaber: Hydac Technology Gmbh, 66280 Sulzbach / Saar (DE)
(72) Erfinder: LANGE, Norbert, 66113 Saarbrücken (DE); WEBER, Norbert, 66280 Sulzbach/Saar (DE)
(74) Vertreter: Bartels und Partner, Patentanwälte
(86) Internationale Anmeldenummer: PCT/EP2010/005925
(87) Internationale Veröffentlichungsnummer: WO 2011/047776

(56) Entgegenhaltungen:
- DE-A1- 10 057 746
- DE-A1-102006 014 758
- US-A- 4 000 758
- US-A- 5 474 042
- "REMOTE TRANSMISSION OIL SUPPLY", RESEARCH DISCLOSURE, MASON PUBLICATIONS, HAMPSHIRE, GB, Nr. 339, 1. Juli 1992 (1992-07-01), Seite 576, XP000319990, ISSN: 0374-4353

## Beschreibung

Die Erfindung betrifft eine Vorrichtung zum impulsartigen Freigeben einer in einem Speichergehäuse bevorratbaren Fluidmenge, insbesondere zum Realisieren einer Start-Stopp-Funktion bei Automatikgetrieben, mit einem sich gegen einen ersten Energiespeicher abstützenden Kolben, der innerhalb des Speichergehäuses verfahrbar mit dem Speichergehäuse die aufnehmbare Fluidmenge begrenzt, wobei der Kolben von einer Ventileinrichtung wenigstens in einer, dem Maximum des Volumens der Fluidmenge in dem Speichergehäuse äquivalenten Position gehalten ist, in dem eine fluidführende Verbindung zwischen dem Speichergehäuse und einem Verbraucher durch die Ventileinrichtung gesperrt ist, wobei die Ventileinrichtung ein in Füllrichtung des Speichergehäuses sperrend eingebautes Rückschlagventil aufweist.

Sowohl zur Reduzierung des Kraftstoffverbrauchs als auch zur Verringerung der Schadstoffemissionen von Verbrennungskraftmaschinen von Kraftfahrzeugen ist vorgesehen, die Verbrennungskraftmaschinen mit Hilfe von verschiedenen Fahrzeugkonzepten in geeigneten Betriebszuständen der Fahrzeuge abzuschalten. Um den Fahrbetrieb trotz solch einer sog. Motor-Start-Stopp-Funktion zu ermöglichen, ist ein kurzer Startvorgang der Verbrennungskraftmaschine und ein sofortiger Kraftschluß in einem Fahrgetriebe des Fahrzeugs erforderlich.

Bei bekannten Automatikgetrieben von Kraftfahrzeugen oder beispielsweise bei automatisierten Schaltgetrieben, welche mit naßlaufenden Lamellenkupplungen ausgeführt sind, werden die Kupplungen über eine Fluidversorgungseinrichtung nur bei laufender Verbrennungskraftmaschine ausreichend mit Hydraulikfluid versorgt. Bei Kraftschlußaufbau in solch einem Getriebe ist zunächst ein Kupplungsspiel zu überwinden und die Kupplung oder Kupplungen durch Anheben des Fluiddrucks vollständig zu schließen. Der Spielausgleich einer Kupplung sowie deren Zuschaltung in den Kraftfluß wird durch Führen einer Fluidmenge in einen Kolbenraum der hydraulisch ansteuerbaren und zuzuschaltenden Kupplungen erreicht, wobei die Fluidmenge von der Fluidversorgungseinrichtung bereitgestellt wird. Bei einer Wiederanfahrt des Kraftfahrzeugs nach Abschalten der Verbrennungskraftmaschine ist unter Umständen dann eine Mehrzahl von Schaltelementen in einem Getriebe geöffnet und mithin zu schließen, wodurch ein unzulässig langes Zeitintervall verstreicht, bis ein vollständiger Kraftschluß in dem Getriebe hergestellt ist.

Diesem Nachteil wird bei bekannten Getrieben mit einer elektromotorisch betriebenen Hydraulikpumpe begegnet, deren Fördervolumen von der Drehzahl der Verbrennungskraftmaschine unabhängig ist, und die bei fehlender Druckversorgung über die Getriebehauptpumpe im Hydrauliksystem zumindest einen Druck erzeugt, mittels dessen das Kupplungsspiel ausgleichbar ist. Die elektromotorisch antreibbare Hydraulikpumpe führt allerdings zu einer Verschlechterung des Getriebewirkungsgrades und zur Verteuerung des Getriebes. Zudem bedarf sie eines nicht unerheblichen zusätzlichen Bauraumbedarfs im Kraftfahrzeug und eines konstruktiven Aufwands zur Anbindung an das Hydrauliksystem des Getriebes und an ein elektrisches Steuer- und Regelsystem.

Die DE 10 2006 014 758 A1 zeigt und beschreibt eine Vorrichtung zum Speichern von Hydraulikfluid eines Hydrauliksystems einer Getriebeeinrichtung eines Fahrzeugs mit wenigstens einem von einer Gehäuseeinrichtung und einer Begrenzungseinrichtung begrenzten und mit einem Hydrauliksystem zum Austausch von Hydraulikfluid in Wirkverbindung bringbaren Speicherraum, dessen Volumen in Abhängigkeit eines Betriebszustandes der Begrenzungseinrichtung und/oder der Gehäuseeinrichtung zwischen einem Minimum und einem Maximum variierbar ist, wobei die Begrenzungseinrichtung und/oder die Gehäuseeinrichtung von einer Ventileinrichtung wenigstens in dem dem Maximum des Volumens des Speicherraumes äquivalenten Betriebszustand entgegen eines Rückstellbestrebens der Gehäuseeinrichtung und/oder der Begrenzungseinrichtung ausgehend von einem Betriebszustand, der von dem zu dem Minimum des Volumens des Speicherraums äquivalenten Betriebszustandes verschieden ist in Richtung ihres dem Minimum des Volumens des Speicherraums äquivalenten Betriebszustandes in einem die Verbindung zwischen dem Speicherraum und dem Hydrauliksystem sperrenden Zustand haltbar sind.

Aus dem Dokument "Remote Transmission Oil Supply", Research Disclosure, Mason Publications, Hampshire, GB, Nr. 339, 1. Juli 1992, Seite 576, XP000319990, ISSN 0374-4353, geht eine Anordnung hervor, bei der eine Automatikkupplung mit einem Hydrospeicher über ein Sitzventil gekoppelt ist. Die Ventilkugel des Sitzventils ist über einen Magnetaktuator ansteuerbar.

Ferner sind Vorrichtungen zum impulsartigen Freigeben einer in einem Speichergehäuse bevorratbaren Fluidmenge für eine Getriebeeinrichtung eines Fahrzeugs bekannt, wobei eine Ventileinrichtung einen in dem Speichergehäuse verfahrbaren Kolben wenigstens in einer, dem Maximum des Volumens der Fluidmenge in dem Speichergehäuse äquivalenten Position hält, in dem die Ventileinrichtung eine fluidführende Verbindung zwischen dem Speichergehäuse und einem Verbraucher sperrt.

Die bekannten Vorrichtungen bauen zumindest teilweise aufwendig auf und bedürfen eines nicht unerheblichen Bauraumbedarfs.

Ausgehend von diesem Stand der Technik liegt der Erfindung die Aufgabe zugrunde, eine Vorrichtung zum impulsartigen Freigeben einer in einem Speichergehäuse bevorratbaren Fluidmenge, insbesondere zur Realisierung einer Start-Stopp-Funktion bei Automatikgetrieben zu schaffen, die einfach aufbaut und robust sowie verschleißfest ist. Eine dahingehende Aufgabe wird mit einer Vorrichtung mit den Merkmalen des Patentanspruches 1 in seiner Gesamtheit gelöst.

Ein Rückschlagventil, das auch als entsperrbares Rückschlagventil ausgebildet sein kann, ist in einen Kolben des Sitzventils integriert. Das Rückschlagventil ist so aufgebaut, dass es in Füllrichtung des Speichergehäuses angeströmt sperrend wirkt. Dadurch ist ein kontrolliertes, im Vergleich zum Ausströmvorgang gedrosseltes Befüllen des Speichergehäuses lediglich über den freien Querschnitt des Sitzventils vorgegeben.
Dadurch, dass die Ventileinrichtung zum Sperren und Öffnen der fluidführenden Verbindung zwischen dem Speichergehäuse und der darin bevorratbaren, durch den Kolben vorgespannten Fluidmenge durch ein Sitzventil gebildet ist, ist eine leckagefreie Steuerung der Kolbenposition und das impulsartige Freigeben der in dem Speichergehäuse bevorratbaren Fluidmenge ermöglicht.

Die Ventileinrichtung gewährleistet auch über die Zahl der angenommenen Schaltvorgänge; beispielsweise bei Motor-Start-Stopp-Betrieb, eine sichere Funktion der Vorrichtung mit sehr kurzen Steuerzeiten. Eine als Sitzventil ausgebildete Ventileinrichtung ermöglicht geringe Umlenkverluste und eine vergleichsweise schnelle Freigabe einer großen gespeicherten Fluidmenge, als dies bei Schieberventilen regelmäßig der Fall ist.

Das Sitzventil kann zweckmäßig in der Art eines Zuschaltventils ausgebildet sein.

Besonders bevorzugt ist vorgesehen, dass, insbesondere bei einer Anwendung der erfindungsgemäßen Vorrichtung in einem Kraftfahrzeug, die Ventileinrichtung als elektromagnetisch betätigtes Ventil ausgebildet ist.

Dadurch, dass der Kolben der Vorrichtung in dem Speichergehäuse allein durch die Schaltstellung des Sitzventils in seiner Position bestimmt ist, ist die Möglichkeit geschaffen, mit vergleichsweise geringem konstruktiven Aufwand und Bauraumbedarf eine Arretiereinrichtung und eine Betätigungseinrichtung für die Arretiereinrichtung zusammenzufassen.

Bei einer besonders bevorzugten Ausführungsform der Vorrichtung ist die Ventileinrichtung quer zu einer Längsachse des Speichergehäuses in einem Deckel des Speichergehäuses als Einschraubventileinheit lösbar festgelegt. Die Länge der Vorrichtung ist durch diese konstruktive Maßnahme minimiert und ein einfaches Austauschen der Ventileinrichtung bei den meist beengten Raumverhältnissen um ein Automatikgetriebe herum vereinfacht.

Um die speicherbare Fluidmenge bei gegebener Größe des Speichergehäuses zu maximieren, ist bevorzugt der Kolben der Vorrichtung als Hohlkolben ausgebildet. Dabei ragt von seinem Kolbenboden ein Zylinder axial in Richtung der, der Fluidmenge des Kolbens abgewandten Seite vor und ermöglicht mit seinem Volumen eine Erweiterung des Speichervolumens des Speichergehäuses.

In den Zylinder ist ein zweiter Kolben längsverschiebbar geführt und der Zylinder ist zu der bevorratbaren Fluidmenge hin offen ausgestaltet. Der zweite Kolben ist von einem zweiten Energiespeicher im Sinne einer Minimierung des Volumens der in dem Speichergehäuse bevorratbaren Fluidmenge vorgespannt. Mit dem Zylinder ist somit ein weiteres Speichervolumen für Hydraulikfluid od. dgl. im Speichergehäuse geschaffen, das parallel zu der übrigen bevorratbaren Fluidmenge abrufbar ist und zeitgleich mit der bevorratbaren Fluidmenge, welche von dem Kolben vorgespannt ist, freigegeben werden kann.

Es ist vorteilhaft, den ersten und zweiten Energiespeicher jeweils als Druckfeder und insbesondere in Form zylindrischer Schraubendruckfedern auszugestalten. Es versteht sich ferner, dass andere Bauarten der Energiespeicher, wie etwa ein mit Arbeitsgas gefüllter Arbeitsraum oder andere Federbauarten, wie Zugfedern oder Tellerfedern, anwendbar sind. Die Federn können auch über ihre Länge verschiedene Federkonstanten aufweisen, so dass gewünschte Federkennlinien verbunden mit einem jeweiligen Verbraucher, angepaßte Strömungsgeschwindigkeiten und Fülldrücke realisierbar sind.

Nachstehend ist die Erfindung anhand von in der Zeichnung dargestellten Ausführungsbeispielen im einzelnen erläutert.
Es zeigen:
- Fig.1: einen schematischen, nicht maßstäblichen Längsschnitt durch ein erstes Ausführungsbeispiel einer erfindungsgemäßen Vorrichtung zum impulsartigen Freigeben einer in einem Speichergehäuse bevorratbaren Fluidmenge;
- Fig.2: einen schematischen, nicht maßstäblichen Längsschnitt durch ein weiteres Ausführungsbeispiel der erfindungsgemäßen Vorrichtung; und
- Fig.3: einen schematischen, nicht maßstäblichen Längsschnitt durch die Vorrichtung nach der Fig.2 im entleerten Zustand des Speichergehäuses.

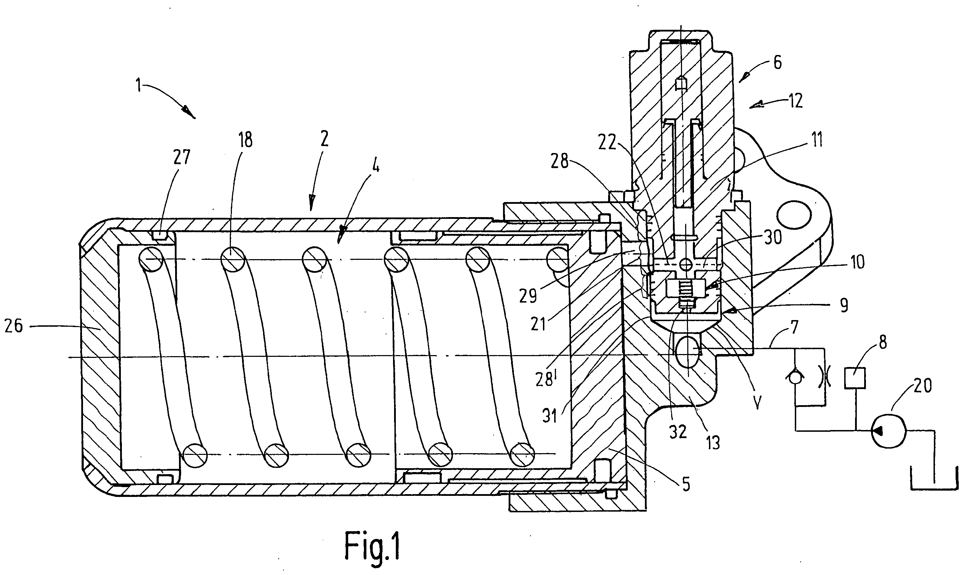

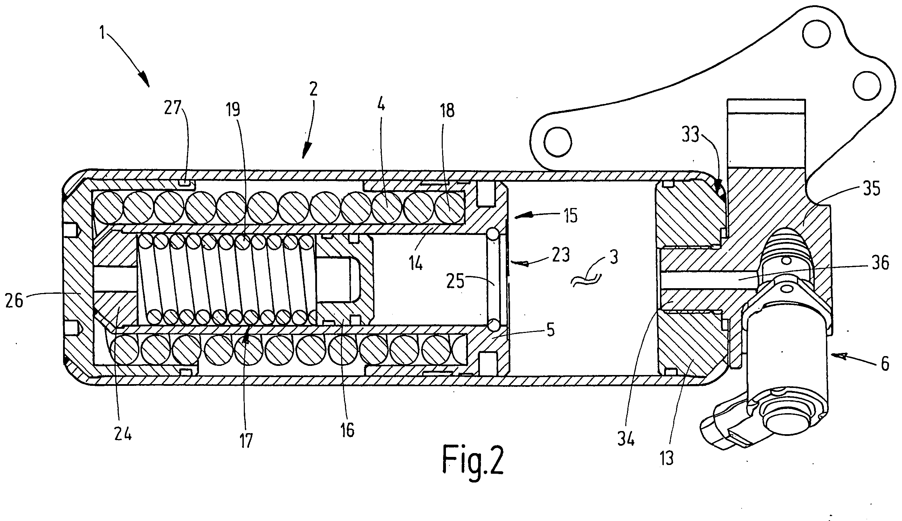

In der Fig.1 ist in einem Längsschnitt eine Vorrichtung 1 zum impulsartigen Freigeben einer in einem Speichergehäuse 2 bevorratbaren Fluidmenge 3 gezeigt. Die Vorrichtung 1 dient zur Speicherung eines Arbeitsmittels für einen Verbraucher einer hydraulischen Anlage, wie beispielsweise zur Speicherung und impulsartigen Abgabe von Hydrauliköl für einen Schaltzylinder eines Automatikgetriebes eines Personenkraftwagens. Das zylindrische Speichergehäuse 2 weist einen ersten Energiespeicher 4 auf, der als zylindrische Druckfeder ausgebildet ist. Der erste Energiespeicher 4 dient zur Beaufschlagung eines Kolbens 5 mit einer Druckkraft, die ausreichend ist, um den Kolben 5 aus einer arretierten Position (vgl. Fig.2) in eine Position zu verbringen, in der die Fluidmenge 3 aus dem Speichergehäuse 2 impulsartig ausgestoßen ist. Die Fluidmenge 3 ist in der Kolbenposition, wie in der Fig.2 gezeigt, durch eine an sich bekannte Fluidfördereinrichtung 20, wie etwa durch eine Rotationspumpe in der Art einer Flügelzellenpumpe oder Zahnradpumpe, unter Druck in das Speichergehäuse 2 eingebracht.

Eine Ventileinrichtung 6 regelt den Fluidstrom zwischen dem Speichergehäuse 2 und einem Verbraucher 8 oder der Druckmittelfördereinrichtung 20. Die Ventileinrichtung 6 ist als Sitzventil 9 ausgebildet, wobei ein mit einer ebenen Dichtfläche versehener Ventilkolben 11 auf einem konusartig sich zu der Dichtfläche des Ventilkolbens 11 erweiternden Ventilsitz V in geschlossenem Zustand des Sitzventils zu liegen kommt. Um den Ventilkolben 11 ist zentral und axial geführt ein Rückschlagventil 10 eingebaut, das in Füllrichtung des Speichergehäuses 2 sperrend eingebaut ist.

Das Rückschlagventil 10 erlaubt ein Durchströmen im Sinne eines Ausströmens der Fluidmenge 3 aus dem Speichergehäuse 2 und bietet somit einen zusätzlichen Öffnungsquerschnitt zu dem von dem Ventilkolben freigegebenen Öffnungsquerschnitt. Dies ist dadurch ermöglicht, dass der an sich einen Ventilsitz steuernde Ventilkolben 11 einen Steuerabschnitt 21 in der Art eines Ventilschiebers aufweist. Der Steuerabschnitt 21 blockiert in einer geschlossenen Position des Sitzventils 9 eine fluidführende Verbindung 22 des Speichergehäuses 2 mit dem Rückschlagventil und öffnet die fluidführende Verbindung 22 bei einer geöffneten Position des Ventilkolbens 11.

Wie die Fig.1 bis 3 weiter zeigen, ist die Ventileinrichtung 6 als Einschraubventil 12 ausgebildet und lösbar als Funktionseinheit in einem Deckel 13 des Speichergehäuses 2 angeordnet. Die Längsachse der Ventileinrichtung 6 verläuft senkrecht zu der Längsachse des Speichergehäuses 2 und schneidet diese. Der Deckel 13 ist im Querschnitt U-förmig ausgebildet und mit einem ringförmigen Rand über etwa 1/5 der Länge des Speichergehäuses 2 durch ein Gewinde an der Außenseite mit dem Speichergehäuse 2 verschraubt. Ein an sich bekanntes, als O-Ring gebildetes Dichtelement 23 ist zwischen dem Deckel 13 und dem Speichergehäuse 2 eingebracht.

Die als elektromagnetisches Ventil gebildete Ventileinrichtung 6 ist in Abhängigkeit des Betriebszustandes einer nicht näher dargestellten Verbrennungskraftmaschine des Kraftfahrzeugs, in dessen Automatikgetriebe die Vorrichtung 1 eingebaut ist, angesteuert. Im Betrieb der Verbrennungskraftmaschine wird das Speichergehäuse 2 von der Druckmittelfördereinrichtung 20 mit der Fluidmenge 3 beschickt, wobei der Kolben 5 entgegen der Rückstellkraft des als Druckfeder 18 gebildeten, ersten Energiespeichers 4 in die in Fig.2 gezeigte Position gebracht wird. Das Sitzventil 9 wird nach dem Befüllvorgang des Speichergehäuses 2 geschlossen und hält somit als hydraulische Arretiereinrichtung den Kolben 5 in der in der Fig.2 gezeigten Position.

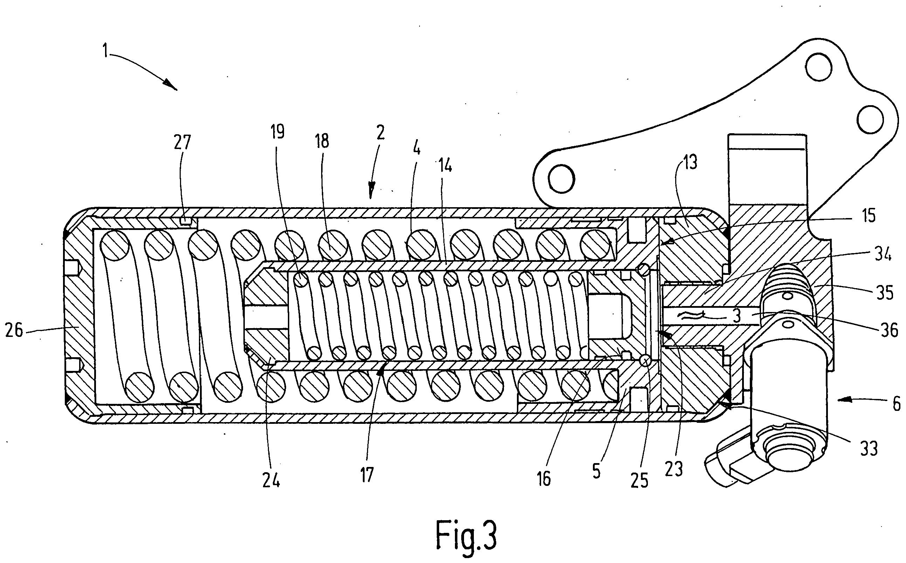

Wie die Fig. 2 und 3 zeigen, kann der Kolben 5 auch in der Art eines Hohlkolbens mit einem Zylinder 14 ausgebildet sein. Der Zylinder 14 ist einstückig mit dem Kolbenboden 15 gebildet und durch den Kolbenboden 15 hindurch geführt, so dass der Kolbenboden 15 selbst eine Öffnung 23 zum Eintritt von Fluid in den Zylinder 14 aufweist. Ein zweiter Kolben 16 ist axial verschiebbar in dem Zylinder 14 gelagert. Der zweite Kolben 16 weist einen ähnlichen Längsschnitt wie der Kolben 5 auf und wird in gleicher Weise wie der Kolben 5 von einem zweiten Energiespeicher 17 im Sinne einer Verringerung seines Speichervolumens für Fluid angefedert.

Der zweite Energiespeicher 17 ist als Druckfeder 19 ausgebildet. Die Druckfeder 19 stützt sich an einem Deckel 24 ab, der an dem freien Ende des Zylinders 14 mit diesem über eine Bördelverbindung verbunden ist. Zum Druckausgleich weist der Deckel 13 eine Durchgangsbohrung auf. Dadurch ist es beispielsweise auch möglich, den jeweils rückseitigen Raum der beiden Kolben 5,16 mit einem Arbeitsgas entsprechend vorzuspannen. Der zweite Kolben 16 ist über einen in der Nähe der Öffnung 23 an dem Innenumfang des Zylinders 14 eingesetzten Sprengring 25 verliersicher gehalten, wobei der Sprengring 25 als Anschlag für den zweiten Kolben 16 dient. In gleicher Weise wie der Deckel 24 des Zylinders 14 ist ein Deckel 26 gegenüberliegend zu dem Deckel 13 des Speichergehäuses 2 mit der Wand des Speichergehäuses 2 mittels einer Bördelverbindung verbunden. Der Deckel 26 ist mit einem U-förmigen Querschnitt, ähnlich wie der Deckel 13, mit seinem Rand an der Innenseite des Speichergehäuses 2 festgelegt, wobei ein Dichtelement 27 in eine Umfangsnut des Deckels 24 eingelegt ist.

Bei einer Anforderung zum Starten der Verbrennungskraftmaschine wird der Ventilkolben 11 des Sitzventils 9 in die in Fig.1 gezeigte Position gebracht. Der Steuerabschnitt 21 des Ventilkolbens ist als Durchmesserrücksprung zwischen zwei Dichtbereichen 28,28' angeordnet. Der Steuerabschnitt 21 gelangt in teilweise oder vollkommene Überdeckung mit einer Fluidöffnung 29 zwischen dem Ventilkolben 11 und dem Innenraum des Speichergehäuses 2, wodurch Fluid in eine als Querkanal 30 von dem Steuerbereich 21 ins Innere des Ventilkolbens 11 geführten fluidführenden Verbindung 7 gelangt. Ein in Richtung der Längsachse des Ventilkolbens 11 angeordneter Kanal 31 verbindet den Querkanal mit dem Rückschlagventil 10 und das Rückschlagventil 10 wiederum mit einem Fluidauslaß 32 der Ventileinrichtung 6. Die Fluidmenge 3 kann über das Rückschlagventil 10 und eine nicht gezeigte fluidführende Verbindung von dem Ventilsitz zu dem Inneren des Speichergehäuses 2 zu dem Verbraucher 8 strömen. Dabei wird auch die in dem Zylinder 14 enthaltene Fluidmenge entleert.

Die Fig.2 und 3 zeigen eine besonders vorteilhafte Bauweise des Deckels 13 des Speichergehäuses 2. Dabei ist der Deckel 13 als Scheibe mit Anschlagflächen 33 für den ungeformten Endbereich des Speichergehäuses 2 ausgebildet. Die Ventileinrichtung 6 ist in einem, mit einem Schraubstutzen 34 versehenen Befestigungsflansch 35 für die Vorrichtung 1 angeordnet. Der Schraubstutzen 34 läßt sich in eine Öffnung in den Deckel 13 einschrauben. In dem Schraubstutzen 34 ist eine Bohrung 36 eingebracht, die den Innenraum des Speichergehäuses 2 mit der Ventileinrichtung 6 fluidführend verbindet.

## Patentansprüche

1. Vorrichtung zum impulsartigen Freigeben einer in einem Speichergehäuse (2) bevorratbaren Fluidmenge (3), insbesondere zum Realisieren einer Start-Stopp-Funktion bei Automatikgetrieben, mit einem sich gegen einen ersten Energiespeicher (9) abstützenden Kolben (5), der innerhalb des Speichergehäuses (2) verfahrbar mit dem Speichergehäuse (2) die aufnehmbare Fluidmenge (3) begrenzt, wobei der Kolben (5) von einer Ventileinrichtung (6) wenigstens in einer, dem Maximum des Volumens der Fluidmenge (3) in dem Speichergehäuse (2) äquivalenten Position gehalten ist, in dem eine fluidführende Verbindung (7) zwischen dem Speichergehäuse (2) und einem Verbraucher (8) durch die Ventileinrichtung (6) gesperrt ist, wobei die Ventileinrichtung (6) aus mindestens einem Sitzventil (9) gebildet ist, wobei die Ventileinrichtung (6) ein in Füllrichtung des Speichergehäuses (2) sperrend eingebautes Rückschlagventil (10) aufweist, **dadurch gekennzeichnet, dass** das Rückschlagventil (10) in einem Ventilkolben (11) des Sitzventils (9) angeordnet ist und mit Fluid beaufschlagt ist, wenn der Ventilkolben (11) des Sitzventils (11) in eine "Öffnen-Position" gebracht ist.

2. Vorrichtung nach Anspruch 1, **dadurch gekennzeichnet, dass** das Sitzventil (9) ein Zuschaltventil ist.

3. Vorrichtung nach Anspruch 1 oder 2, **dadurch gekennzeichnet, dass** das Rückschlagventil (19) in der fluidführenden Verbindung (7) zwischen dem Verbraucher (8) und dem Speichergehäuse (2) sperrend in Bezug auf eine Fluidströmung von dem Verbraucher (8) zu dem Speichergehäuse (2) angeordnet ist.

4. Vorrichtung nach einem der Ansprüche 1 bis 3, **dadurch gekennzeichnet, dass** das Sitzventil (9) als elektromagnetisch betätigtes Ventil ausgebildet ist.

5. Vorrichtung nach einem der Ansprüche 1 bis 4, **dadurch gekennzeichnet, dass** das Sitzventil (9) in der Art eines Einschraubventils (12) ausgebildet ist.

6. Vorrichtung nach einem der Ansprüche 1 bis 5, **dadurch gekennzeichnet, dass** die Ventileinrichtung (6) in einem Deckel (13) des Speichergehäuses (2) angeordnet ist.

7. Vorrichtung nach einem der Ansprüche 1 bis 6, **dadurch gekennzeichnet, dass** der Kolben (5) der Vorrichtung (1) als Hohlkolben ausgebildet ist, der einen Zylinder (14) an seinem Kolbenboden (15) aufweist und dass in dem Zylinder (14) ein zweiter Kolben (6) längsverschiebbar geführt ist und der Zylinder (14) offen zu dem, die Fluidmenge (3) aufnehmenden Teil des Speichergehäuses (2) ausgebildet ist.

8. Vorrichtung nach Anspruch 7, **dadurch gekennzeichnet, dass** der zweite Kolben (16) in dem Zylinder (14) von einem zweiten Energiespeicher (17) im Sinn einer Minimierung des Volumens der in dem Speichergehäuse (2) bevorrateten Fluidmenge (3) vorgespannt ist.

9. Vorrichtung nach einem der Ansprüche 1 bis 8, **dadurch gekennzeichnet, dass** der erste Energiespeicher (4) als Druckfeder (18) ausgebildet ist und in einem Raum, der von dem Kolben (5) von der Fluidmenge (3) getrennt ist, in dem Speichergehäuse (2) angeordnet ist.

10. Vorrichtung nach Anspruch 9, **dadurch gekennzeichnet, dass** der zweite Energiespeicher (16) als Druckfeder (19) ausgebildet ist.

## Claims

1. A device for the pulsed release of a quantity of fluid (3) which can be stored in an accumulator housing (2), in particular for implementing a start/stop function in automatic transmissions, with a piston (5) which is supported on a first energy accumulator (9) which limits the quantity of fluid (3) that can be received inside the accumulator housing (2) in displaceable manner together with the accumulator housing (2), wherein the piston (5) is held by a valve device (6) at least in a position equivalent to the maximum of the volume of the quantity of fluid (3) in the accumulator housing (2), in which a fluidic connection (7) between the accumulator housing (2) and an appliance (8) is blocked by the valve device (6), wherein the valve device (6) is formed from at least one seat valve (9), wherein the valve device (6) has a check valve (10) installed in blocking manner in filling direction of the accumulator housing (2), **characterised in that** the check valve (10) is arranged in a valve piston (11) of the seat valve (9) and is supplied with fluid if the valve piston (11) of the seat valve (11) is brought into an "open position".

2. The device according to claim 1, **characterised in that** the seat valve (9) is a sequence valve.

3. The device according to claim 1 oder 2, **characterised in that** the check valve (19) is arranged in fluidic connection (7) between the appliance (8) and the accumulator housing (2) in blocking manner in respect of a fluid flow from the appliance (8) to the accumulator housing (2).

4. The device according to one of claims 1 to 3, **characterised in that** the seat valve (9) is designed as a solenoid valve.

5. The device according to one of claims 1 to 4, **characterised in that** the seat valve (9) is designed as a type of clamp-in valve (12).

6. The device according to one of claims 1 to 5, **characterised in that** the valve device (6) is arranged in a cover (13) of the accumulator housing (2).

7. The device according to one of claims 1 to 6, **characterised in that** the piston (5) of the device (1) is designed as a hollow piston which has a cylinder (14) on the base of is piston (15) and that a second piston (6) is guided, longitudinally displaceable, in the cylinder (14) and the cylinder (14) is designed open to the part of the accumulator housing (2) receiving the quantity of fluid (3).

8. The device according to claim 7, **characterised in that** the second piston (16) is prestressed in the cylinder (14) by a second energy accumulator (17) within the meaning of a minimisation of the volume of the quantity of fluid (3) stored in the accumulator housing (2).

9. The device according to one of claims 1 to 8, **characterised in that** the first energy accumulator (4) is designed as a pressure spring (18) and is arranged in a space which is separated from the piston (5) by the quantity of fluid (3) in the accumulator housing (2).

10. The device according to claim 9, **characterised in that** the second energy accumulator (16) is designed as a pressure spring (19).

## Revendications

1. Système de libération par impulsions d'une quantité (3) de fluide pouvant être mise en réserve dans une enveloppe (2) de stockage, notamment pour réaliser une fonction start-stop dans des transmissions automatiques, comprenant un piston (5), qui s'appuie sur un premier accumulateur (9) d'énergie, qui, déplaçable dans l'enveloppe (2) de stockage, délimite avec l'enveloppe (2) de stockage la quantité (3) de fluide, qui peut être reçue, le piston (5) étant maintenu, par un dispositif (6) de soupape, au moins dans une position équivalente au maximum du volume de la quantité (3) de fluide dans l'enveloppe (2) de stockage, position dans laquelle une liaison (7) fluidique, entre l'enveloppe (2) de stockage et un consommateur (8), est obturée par le dispositif (6) de soupape, le dispositif (6) de soupape étant formé d'au moins une soupape (9) à siège, le dispositif (6) de soupape ayant un clapet (10) antiretour monté bloquant dans le sens de remplissage de l'enveloppe (2) de stockage, **caractérisé en ce que** le clapet (10) antiretour est monté dans un piston (11) de la soupape (9) à siège et est alimenté en du fluide lorsque le piston (11) de la soupape (11) à siège est mis dans une "position ouverte".

2. Système suivant la revendication 1, **caractérisé en ce que** la soupape (9) à siège est une soupape d'admission.

3. Système suivant la revendication 1 ou 2, **caractérisé en ce que** le clapet (19) antiretour est monté dans la liaison (7) fluidique, entre le consommateur (8) et l'enveloppe (2) de stockage, de manière à obturer en ce qui concerne un courant de fluide allant du consommateur (8) à l'enveloppe (2) de stockage.

4. Système suivant l'une des revendications 1 à 3, **caractérisé en ce que** la soupape (9) à siège est constituée en soupape actionnée électromagnétiquement.

5. Système suivant l'une des revendications 1 à 4, **caractérisé en ce que** la soupape (9) à siège est constituée à la manière d'une soupape (12) vissée.

6. Système suivant l'une des revendications 1 à 5, **caractérisé en ce que** le dispositif (6) de soupape est disposé dans un couvercle (13) de l'enveloppe (2) de stockage.

7. Système suivant l'une des revendications 1 à 6, **caractérisé en ce que** le piston (5) du système (1) est constitué sous la forme d'un piston creux, qui a un cylindre (14) sur son fond (15) de piston et **en ce que**, dans le cylindre (14), est guidé, de manière à coulisser longitudinalement, un deuxième piston (6) et le cylindre (14) est ouvert vers la partie, recevant la quantité (3) de fluide, de l'enveloppe (2) de stockage.

8. Système suivant la revendication 7, **caractérisé en ce que** le deuxième piston (16) dans le cylindre (14) est précontraint par un deuxième accumulateur (17) d'énergie dans le sens d'une minimisation du volume de la quantité (3) de fluide mise en réserve dans l'enveloppe (2) de stockage.

9. Système suivant l'une des revendications 1 à 8, **caractérisé en ce que** le premier accumulateur (4) d'énergie est constitué sous la forme d'un ressort (18) de compression et est disposé dans un espace, séparé du piston (5) par la quantité (3) de fluide, de l'enveloppe (2) de stockage.

10. Système suivant la revendication 9, **caractérisé en ce que** le deuxième accumulateur (16) d'énergie est constitué sous la forme d'un ressort (19) de compression.
